# EUROPEAN PATENT SPECIFICATION

(11) **EP 3 351 113 B1**
(45) Date of publication and mention of the grant of the patent: **02.12.2020**
(21) Application number: 18152412.5
(22) Date of filing: 18.01.2018
(51) Int. Cl.: A23G 9/12, A23G 9/22, A23G 9/30, B01F 7/16, B01F 7/32, B01F 15/00, B01F 15/06, B01F 7/00

(54) **ROTATABLE MIXING MEMBER FOR MACHINES FOR COOKING CUSTARD AND MACHINE FOR COOKING CUSTARD PROVIDED WITH SAID MIXING MEMBER**
ROTIERBARE MISCHTEIL FÜR MASCHINEN ZUM KOCHEN EINER DESSERT-BASIS UND MASCHINE ZUM KOCHEN EINER DESSERT-BASIS UMFASSEND DIESES MISCHTEIL
ORGANE MELANGEUR ROTATIF POUR MACHINES POUR LA CUISSON DE CREME PATISSIERES ET MACHINE POUR LA PRODUCTION DE CREME PATISSIERE COMPRENANT LEDIT ORGANE MELANGEUR

(30) Priority: 18.01.2017 IT 201700005194
(43) Date of publication of application: 25.07.2018
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Bellemo, Matteo

(56) References cited:
- EP-A1- 0 534 118
- EP-A1- 2 679 100
- EP-A1- 2 870 877
- WO-A1-2013/128708
- FR-A1- 2 931 036
- GB-A- 915 326

## Description

### PRIORITY CLAIM

*This* application *claims priority from Italian Patent Application No.* 102017000005194 *filed on* 18/01/2017.

The present invention relates to a rotatable mixing member for cream-cooking machines and a cream-cooking machine provided with said rotatable mixer. The invention is defined by the claims.

In more detail, the present invention relates to a rotatable mixing member for pasteurizing machines also capable of cooking pastry creams and the like. Machines to which the following description will make explicit reference without thereby losing generality.

As is known, pasteurizing machines are machines that are specifically structured to pasteurize milk intended for the production of ice cream, pastry creams and the like. Some models of these pasteurizing machines, traditionally called "kettles", are also used for producing pastry creams and the like.

In more detail, these pasteurizing/cream-cooking machines are usually provided with a large, substantially cylindrical in shape, processing tank which has a capacity of several tens of litres and extends vertically inside the machine, starting from the upper face of the same machine, and additionally also comprise: an electrically-operated heating assembly which is housed inside the machine and is capable of bringing and maintaining the tank and the contents thereof to/at a temperature ranging between +50°C and +110°C; an electrically-operated cooling assembly which is housed inside the machine and is capable of bringing and maintaining the tank and the contents thereof to/at a temperature ranging between 0°C and +10°C; a rotatable mixing member which is fixed in axially rotatable manner to the bottom of the processing tank, so as to be able to rotate inside the tank while remaining coaxial with the longitudinal axis of the same tank; and an electric motor which is located beneath the processing tank and is adapted to drive the mixing member into rotation, so as to be able to blend and mix the semi-solid mixture that forms inside the tank.

More specifically, in most of the pasteurizing machines currently on the market, the mixing member is basically made up of a central hub which is fitted in angularly rigid, but manually removable manner, onto a supporting shaft extending in cantilever manner from the bottom of processing tank while remaining coaxial with the longitudinal/vertical axis of the same tank, and is driven into rotation by the electric motor; of a pair of supporting arms which extend in cantilever manner from the central hub in a diametrical position on opposite sides of the same hub, up to almost reach the inner cylindrical surface of the tank; and of a series of scraping spatulas that are fixed on the two supporting arms, so as to be able to scrape directly on the cylindrical lateral wall or on the bottom of the processing tank when the hub rotates inside the processing tank.

FR2931036 A1 discloses such a mixing member.

Aim of the present invention is that of improving the capability of the mixing member to mix and blend the ingredients that are poured into the processing tank, so as to increase the efficiency of the machine during the cooking of pastry creams.

In compliance with these aims, according to the present invention there is provided a rotatable mixing member for cream-cooking machines as defined in Claim 1 and preferably, though not necessarily, in any one of the claims dependent thereon.

According to the present invention, there is also provided a cream-cooking machine for the production of pastry creams and the like as defined in claim 11

The present invention will now be described with reference to the accompanying drawings, which illustrate a non-limiting embodiment thereof, in which:
- Figure 1 is a perspective view of a cream-cooking machine for the production of pastry creams and the like, provided with a rotatable mixing member realized according to the teachings of the present invention;
- Figure 2 is a side view of the cream-cooking machine depicted in Figure 1, with parts in section and parts removed for clarity;
- Figure 3 is an isometric view of the rotatable mixing member depicted in Figures 1 and 2; whereas
- Figure 4 is an isometric and partially exploded view of the rotatable mixing member of Figure 3, with parts removed for clarity.

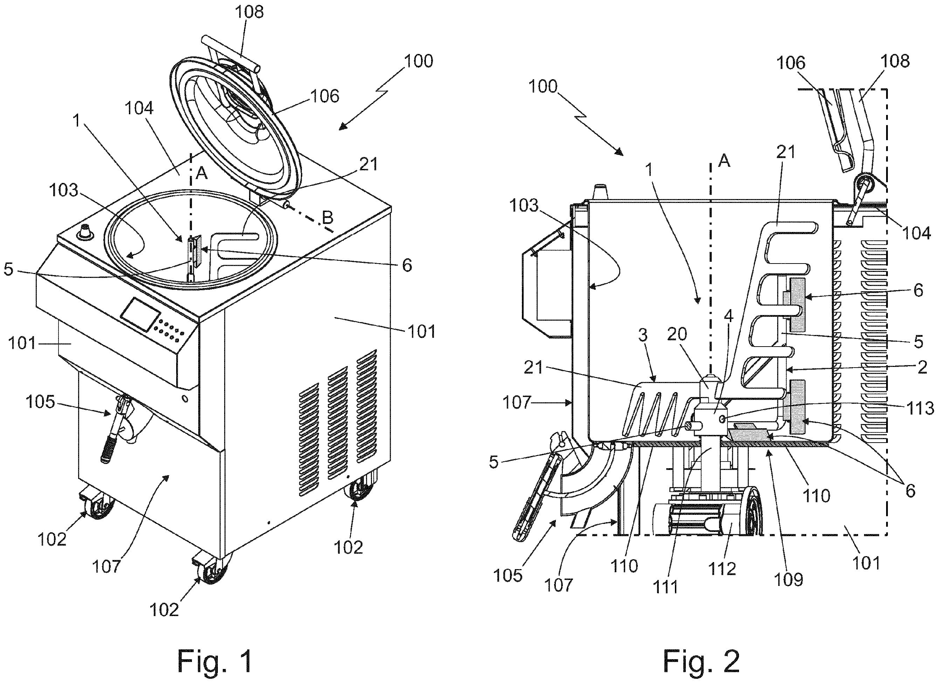

With reference to figures 1, 2 and 3, number 1 denotes as a whole a rotatable mixing member adapted to be accommodated in axially rotatable manner inside the processing tank of a cream-cooking machine, i.e. a machine structured to cook pastry creams and similar products. In addition, the mixing member 1 is also adapted to to be accommodated in axially rotatable manner inside the processing tank of a pasteurizing machine, i.e. a machine specifically structured to pasteurize milk intended for the production of ice cream, pastry creams and the like.

In the example shown, in particular, the rotatable mixing member 1 is preferably housed in axially rotatable manner inside the processing tank of a pasteurizing machine 100 capable of cooking pastry creams and the like, i.e. a pasteurizing/cream-cooking machine.

In more detail, the pasteurizing/cream-cooking machine 100 preferably comprises: a preferably substantially parallelepiped-shaped, box-like outer casing 101 which is preferably provided with a plurality of ground-resting wheels 102; a preferably substantially cylindrical-shaped, large processing tank 103 which is intended to receive the milk to be pasteurized or the ingredients required to produce the desired amount of pastry cream or the like, and which extends inside the box-like casing 101, preferably starting from an upper wall 104 of box-like casing 101, while remaining substantially coaxial to a substantially vertical, longitudinal axis A; a drain mouth 105 with a preferably manually-operated, shut-off valve which communicates directly with the bottom of processing tank 103 and is capable of draining the contents of processing tank 103 outside of the machine; and optionally also a removable lid 106 which is placed to close the upper mouth of processing tank 103.

In the example shown, in particular, the processing tank 103 is preferably made of steel and has a nominal capacity preferably ranging between 20 and 180 litres. Preferably, the longitudinal axis A of processing tank 103 is additionally substantially perpendicular to the upper wall 104 of box-like casing 101.

The drain mouth 105, in turn, is preferably structured so as to protrude in cantilever manner from the front wall 107 of box-like casing 101, and is preferably provided with a sliding piston, shut-off valve.

With reference to Figures 1 and 2, on the other hand the lid 106 preferably consists of a substantially circular cup-shaped body which has an outer diameter greater than the nominal diameter of the upper mouth of processing tank 103 and is arranged upside down, resting on the upper wall 104 of box-like casing 101, above the mouth of processing tank 103, so as to be able to cover/close said mouth.

Preferably, the removable lid 106 is also fixed on a movable support arm 108 which, in turn, is butt hinged to the upper wall 104 of box-like casing 101, beside the mouth of tank 103, so as to be able to rotate about a transversal and horizontal reference axis B, between a lowered position (not shown) in which the support arm 108 is arranged substantially parallel to the upper wall 104, astride the mouth of the processing tank 103, so that the cup-shaped body 107 is arranged to close the mouth of tank 103, and a raised position (Figure 1) in which the support arm 108 is arranged more or less perpendicular to the upper wall 104 of box-like casing 101, so that the cup-shaped body 106 is moved away from the mouth of the processing tank 103.

Inside the box-like casing 101, the pasteurizing/ cream-cooking machine 100 additionally comprises: an electrically-operated heating assembly 109 which is structured so as to be able to heat the tank 103 and the contents thereof up to a given maximum temperature; and optionally also an electrically-operated cooling assembly (not shown in the figures), which is structured so as to be able to cool the tank 103 and the contents thereof down to a given minimum temperature.

In more detail, the heating assembly 109 is at least partially located outside of the processing tank 103, preferably in contact with the bottom wall of tank 103, and is capable of bringing and maintaining the tank 103 and the contents thereof to/at a given temperature higher than +50°C and preferably, though not necessarily, ranging between +70°C and +110°C.

The cooling assembly, in turn, is at least partially located outside the processing tank 103, preferably in contact with the lateral cylindrical wall of tank 103, and is capable of bringing and maintaining the tank 103 and the contents thereof to/at a given temperature ranging between +0°C and +10°C.

In the example shown, in particular, the heating assembly 109 preferably comprises: a preferably substantially discoidal in shaped, resistor 110 which is firmly fixed in abutment against the bottom wall of processing tank 103, so as to transmit by thermal condition the heat produced to the tank 103 and the contents thereof; and a preferably electronically-controlled, power supply unit which is capable of circulating in the resistor 110 an electric current with a predetermined and adjustable value.

Preferably, the refrigerating assembly, in turn, consists of an electrically-operated heat-pump device that won't be further described as it is already widely used in the pasteurizing machines currently on the market.

With reference to Figure 2, the pasteurizing/cream-cooking machine 100 is furthermore provided with a rotatable supporting shaft 111 preferably made of steel, which projects upwards and in cantilever manner from the bottom of processing tank 103, while remaining locally coaxial to the longitudinal axis A of the tank; and with an electric gear-motor 112 or the like, which is preferably located beneath the processing tank 103, close to the bottom of the tank, and is capable of driving the supporting shaft 111 into rotation around its longitudinal axis, i.e. around the tank longitudinal axis A.

Preferably, the electric gear-motor 112 is additionally powered by an inverter so that the rotational speed of supporting shaft 111 can be adjusted/varied at will.

With reference to Figures 1 and 2, the mixing member 1 is accommodated inside the processing tank 103 with the capability of rotating around a rotation axis R preferably substantially coinciding with the tank longitudinal axis A, and is structured, as a whole, so as to be able, while rotating inside the processing tank 103, to blend the ingredients and then to mix the pastry cream during cooking, while at same continuously removing the layer of pastry cream that sticks to/forms on the inner surface of processing tank 103.

In more detail, the mixing member 1 extends inside the processing tank 103 substantially coaxial with the tank longitudinal axis A, and is fitted in an angularly rigid manner on supporting shaft 111 so as to be able to rotate inside the processing tank 103 and around the longitudinal axis A, together with the supporting shaft 111.

In addition, the mixing member 1 is also fitted on the supporting shaft 111 in a rigid and stable, though manually detachable manner, so that it can be easily extracted/ removed from the processing tank 103.

With reference to Figures 2, 3 and 4, in particular, the mixing member 1 comprises: a scraper tool 2 which is adapted to be driven into rotation inside the processing tank 103 around a rotation axis R preferably substantially coincident with the longitudinal axis A of processing tank 103, and is structured so as to scrape the inner surface of the processing tank 103 to remove the layer of pastry cream or similar; and a mixer tool 3 which is discrete and distinct from the scraper tool 2, is fitted/engaged in manually removable manner directly onto the scraper tool 2 in order to rotate around rotation axis R together with the scraper tool 2, and is finally structured so as to continuously mix the material present in the processing tank 103.

In more detail, the scraper tool 2 is adapted to be fitted in angularly rigid and manually removable manner onto the supporting shaft 111, so as to be able to rotate inside processing tank 103 around the longitudinal axis A, together with the supporting shaft 111, and is structured so as to be able to scrape the bottom and the lateral wall of processing tank 103 in order to remove the layer of pastry cream that sticks to the inner surface of processing tank 103.

With reference to Figures 2, 3 and 4, the scraper tool 2 particularly comprises: a central hub 4 preferably substantially ogival in shape and preferably made of steel, which is coaxial with the rotation axis R of mixing member 1 and is structured so as to be fitted in angularly rigid and manually removable manner onto the supporting shaft 111, preferably by means of a transversal locking pin 113, so as to be able to rotate around the tank longitudinal A together with the supporting shaft 111; a plurality of supporting arms 5 preferably made of steel, which extend in cantilever manner from the hub 4 angularly staggered around the rotation axis R, up to almost reach the inner surface of the processing tank 103; and a series of scraping spatulas 6 preferably made of plastic material, which are fixed on supporting arms 5 so as to be able to scrape directly on the inner surface of processing tank 103 when the hub 4 rotates about the tank longitudinal axis A together with supporting shaft 111.

The mixing tool 3 is fixed/engaged in angularly rigid and manually removable manner directly onto the hub 4 of scraper tool 2.

In more detail, the scraper tool 2 is preferably provided with a pair of supporting arms 5 which extend in cantilever manner from hub 4, preferably in a diametrical position on opposite sides of hub 4.

Each supporting arm 5 furthermore extends in cantilever manner from hub 4 preferably while remaining on the diametrical plane of hub 4, and is preferably substantially L-shaped so as to have a proximal segment 5a skimming the bottom of processing tank 103, and a distal segment 5b skimming the lateral wall of processing tank 103.

In addition, the proximal segment 5a is preferably substantially rectilinear, and preferably extends in cantilever manner from the hub 4 more or less orthogonal to rotation axis R, so as to be locally substantially parallel to and skimmed over the bottom of processing tank 103. The distal segment 5b, in turn, is preferably substantially rectilinear, and preferably extends more or less parallel to rotation axis R, so as to be locally substantially parallel to and skimmed over the lateral wall of processing tank 103.

In other words, in the example shown, the hub 4 and the two supporting arms 5 form a substantially U-shaped rigid structure 7 that supports the scraping spatulas 6 and moves skimming the inner surface of processing tank 103 when the hub 4 rotates about the tank longitudinal axis A together with supporting shaft 111.

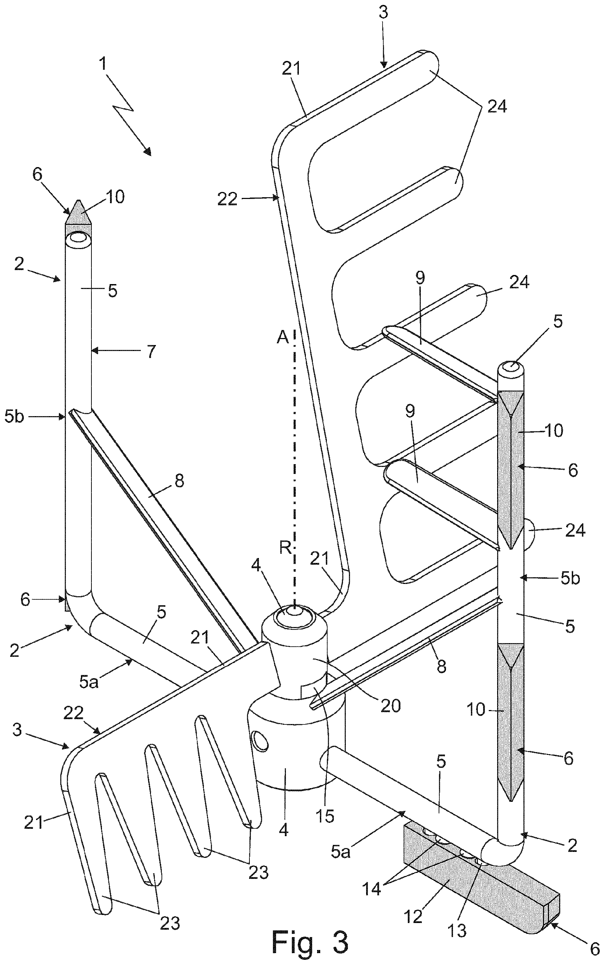

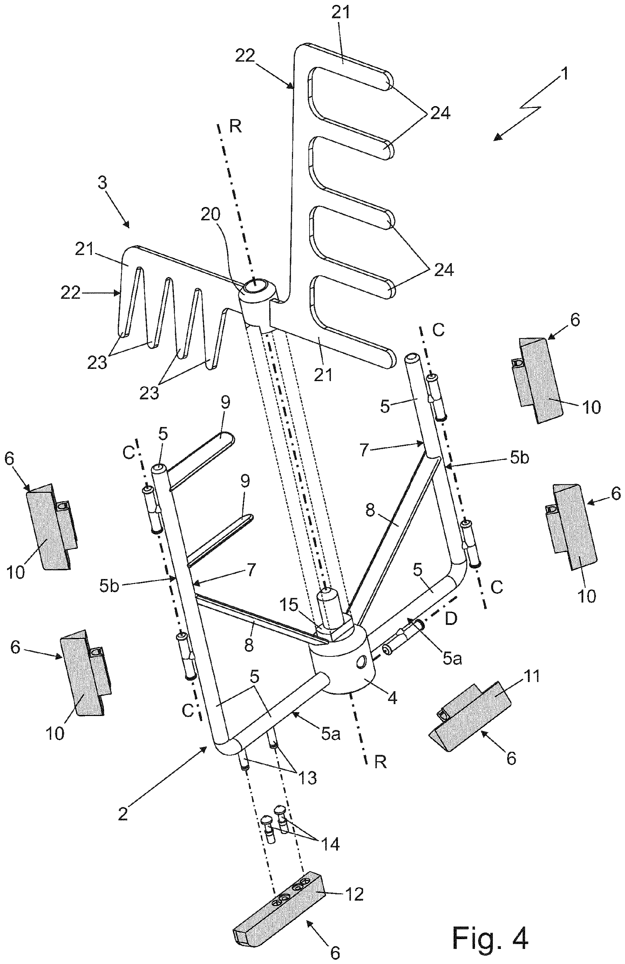

With reference to Figures 3 and 4, the scraper tool 2 preferably additionally comprises, for each supporting arm 5, a respective stiffening rod or bar 8 preferably substantially plate-like and preferably made of stainless steel, which extends obliquely and like a bridge from the distal segment 5b of supporting arm 5 up to the central hub 4, so as to rigidly connect the distal segment 5b directly to hub 4.

Preferably, each stiffening rod or bar 8 furthermore connects/joins to the distal segment 5b of supporting arm 5 substantially at the middle portion of said distal segment 5b.

The stiffening rods or bars 8 has the function of opposing/preventing the spreading apart of the supporting arms 5 due to the centrifugal force.

Preferably, the scraper tool 2 additionally comprises one or more deflecting winglets 9 flat and elongated in shape and preferably made of steel, which protrude from the distal segment 5b of at least one of the supporting arms 5 spaced apart side by side to one another, and extend in cantilever manner towards the rotation axis R preferably while remaining substantially parallel to each other.

In more detail, the deflecting winglet(s) 9 preferably extend(s) in cantilever manner towards the rotation axis R in a substantially radial direction.

Preferably, the deflecting winglet(s) 9 also has/have an angle of incidence greater than 0° and preferably ranging between 5° and 15°.

With reference to Figures 2, 3 and 4, each supporting arm 5, on the other hand, is preferably provided with a plurality of scraping spatulas 6 suitably arranged on the proximal segment 5a and on the distal segment 5b.

The scraping spatula(s) 6 located on the proximal segment 5a of supporting arm 5 is/are adapted to scrape on the bottom of processing tank 103. The scraping spatula(s) 6 located on the distal segment 5b of supporting arm 5, in turn, is/are adapted to slide on the cylindrical lateral wall of processing tank 103.

In the example shown, in particular, each supporting arm 5 is preferably provided with two scraping spatulas on the distal segment 5b, and one scraping spatula on the proximal segment 5a.

Preferably, each of the scraping spatulas 6 located on the distal segment 5b of supporting arm 5 furthermore basically consists of a plate-like body 10 made of plastic material (for example polytetrafluoroethylene or PTFE), which is flag-hinged to the supporting arm 5 so as to be able to freely swing/rotate by a few degrees around a corresponding reference axis C preferably substantially parallel to rotation axis R and/or substantially parallel to the lateral wall of processing tank 103, so as to scrape on the inner surface of processing tank 103 with a given angle of incidence.

Preferably, the scraping spatula 6 located on the proximal segment 5a of supporting arm 5, on the other hand, may comprise a plate-like body 11 preferably made of plastic material (for example polytetrafluoroethylene or PTFE), which is flag-hinged to the supporting arm 5 so as to be able to freely swing/rotate by a few degrees around a corresponding reference axis D substantially perpendicular to the hub rotation axis R, so as to scrape on the inner surface of processing tank 103 with a given angle of incidence.

Alternatively, the scraping spatula 6 located on the proximal segment 5a of supporting arm 5 may comprise an elongated lath 12 made of plastic material (for example polytetrafluoroethylene or PTFE), which extends skimming and locally substantially parallel to the proximal segment 5a of supporting arm 5, on the opposite side with respect to the distal segment 5b, and is fitted in axially slidable manner on a pair of transversal supporting pins 13 that project in cantilever manner from the proximal segment 5a of the arm, one beside the other, and extend towards the bottom of processing tank 103, while remaining parallel to each other and to rotation axis R.

The elongated lath 12 is movable like a guillotine on the two supporting pins 13, and is pushed and held in abutment against the inner surface of processing tank 103 by at least one, and preferably a number of elastic opposing members 14 (two elastic members 14 in the example shown) that are preferably interposed between the elongated lath 12 and the proximal segment 5a of supporting arm 5.

With reference to Figures 2, 3 and 4, the mixer tool 3, in turn, is discrete and distinct from the scraper tool 2, and is adapted to be fitted/engaged directly onto the scraper tool 2 in angularly rigid and manually removable manner, in order to rotate around the longitudinal axis A together with the scraper tool 2, and is structured so as to be able to continuously mix the material present in processing tank 103.

More in detail, the mixer tool 3 comprises: a central hub 20 preferably substantially tubular cylindrical in shape and preferably made of steel, which is coaxial with rotation axis R of mixing member 1, and is fitted/fittable onto the hub 4 of scraper tool 2 in angularly rigid and manually removable/extractable manner, preferably by means of a diametrical tooth or nose 15 directly formed on the hub 4, so as to be able to rotate about the tank longitudinal axis A together with the scraper tool 2; and a plurality of plate-like blades 21 preferably made of steel, which are preferably substantially comb-shaped and extend in cantilever manner from the hub 20 angularly staggered around the rotation axis R.

Preferably, the plate-like blades 21 are furthermore angularly staggered around hub 20 so as to be intercalated with the supporting arms 5 of scraper tool 2.

In more detail, the mixer tool 3 is provided with a pair of plate-like blades 21 which extend in cantilever manner from hub 20, preferably in diametrical position on opposite sides of hub 20.

Preferably, the lying plane of the two plate-like blades 21 is also orthogonal to the lying plane of the two supporting arms 5 of scraper tool 2.

Furthermore, the two plate-like blades 21 preferably extend in cantilever manner from hub 20, one locally substantially perpendicular and skimming the bottom of processing tank 103, the other locally substantially perpendicular and skimming the lateral wall of processing tank 103.

In other words, in the example shown, the hub 20 and the two plate-like blades 21 form a substantially L-shaped rigid structure 22, which is coupled in angularly rigid and manually removable manner to the rigid structure 7 of scraper tool 2, so as to be able to rotate inside the processing tank 103 and around the tank longitudinal axis A, together with the rigid structure 7.

Preferably, the plate-like blade 21 extending skimmed over the bottom of processing tank 103 is additionally oriented so that the ends of its teeth 23 face and skim the bottom of processing tank 103.

The plate-like blade 21 extending skimmed over the lateral wall of processing tank 103, on the other hand, is preferably oriented so that the ends of its teeth 24 face and skim the lateral wall of processing tank 103.

Operation of rotatable mixing member 1 and of cream-cooking machine 100 are easily inferable from the above description, and therefore requires no further explanation.

The advantages deriving from the particular structure of mixing member 1 are large in number.

Experimental tests have shown that the combined action of the scraping spatulas 6 of scraper tool 2 and the plate-like blades 21 of mixer tool 3 allows a more rapid and uniform mixing and blending of the ingredients which are poured into processing tank 103 to make the pastry cream.

In addition, the comb shape and the orientation of the plate-like blades 21 allow to push, against the bottom and the cylindrical lateral wall of processing tank 103, a greater amount of pastry cream per time unit, thereby distributing the heat more effectively inside processing tank 103, with all the benefits that this entails.

In fact, the use of mixing member 1 during the cooking of the pastry cream allows a much more uniform distribution of the temperature inside processing tank 103, thus reducing the cooking time of the pastry cream.

Furthermore, the partitioning of mixing member 1 into a scraper tool 2 and a mixer tool 3 that are distinct and selectively coupleable to one another greatly simplifies the disassembling and cleaning operations of mixing member 1, with a resulting significant reduction in the operating costs.

Last but not least, the mixing member 1 can also be used without the mixer tool 3, for mixing more dense and viscous mixtures such as, for example, bread dough.

In other words, the partitioning of mixing member 1 into a scraper tool 2 and a mixer tool 3 that are distinct and selectively coupleable to one another, makes the mixing member 1 much more versatile.

For example, in a non-shown alternative embodiment, the scraper tool 2 may include, instead of the two oblique stiffening rods or bars 8, a diametrical stiffening bar which extends astride the distal segments 5b of the two supporting arms 5, spaced above hub 4 and hub 20, so as to rigidly connect the distal segments 5b to each other and to oppose/prevent the spreading apart of the supporting arms 5 due to the centrifugal force.

Furthermore, the diametrical stiffening bar is preferably inclined by a given angle with respect to the rotation axis R of mixing member 1, and is preferably plate-like and twisted so as to have a substantially helical profile.

Finally, in a less sophisticated and non-shown embodiment, only one of plate-like blades 21 is substantially comb-shaped.

## Claims

1. A rotatable mixing member (1) suitable for cream-cooking machines (100) and which is adapted to be housed in axially rotatable manner inside the processing tank (103) of a cream-cooking machine (100) for production of pastry cream and the like, in order to mix the pastry cream or similar and to simultaneously remove the layer of pastry cream or similar that sticks to/forms on the inner surface of the processing tank (103);
the rotatable mixing member (1) comprising a scraper tool (2) which is adapted to be driven into rotation inside the processing tank (103) around a given rotation axis (A, R), and is structured so as to scrape the inner surface of the processing tank (103) to remove said layer of pastry cream or similar;
the rotatable mixing member (1) **being characterized by** additionally comprising a mixer tool (3) which is discrete and distinct from said scraper tool (2), is fitted/engaged in detachable manner directly onto the scraper tool (2) in order to rotate together with the scraper tool (2), and is structured so as to continuously mix the material present in the processing tank (103);
the scraper tool (2) comprising: a first hub (4) which is coaxial with said rotation axis (R), and is adapted to be fitted in angularly rigid and manually removable manner onto a supporting shaft (111) that protrudes in cantilever manner inside the processing tank (103); a plurality of supporting arms (5) which extend in cantilever manner from said first hub (4) angularly staggered around said rotation axis (R), up to almost reach the inner surface of the processing tank (103) ; and a series of scraping spatulas (6), which are fixed on the supporting arms (5) so as to scrape on the inner surface of the processing tank (103) when said first hub (4) rotates inside the processing tank (103) together with the supporting shaft (111);
the mixing tool (3) comprising: a second hub (20) which is coaxial to said rotation axis (R), and is adapted to be fitted in angularly rigid and manually removable manner onto the first hub (4) of the scraper tool (2) to rotate together with the scraper tool (2) ; and a plurality of plate-like blades (21) which extend in cantilever manner from said second hub (20) and are angularly staggered around the rotation axis (R).

2. A rotatable mixing member according to Claim 1, **characterized in that** at least one of the plate-like blades (21) is substantially comb-shaped.

3. A rotatable mixing member according to Claim 1 or 2, **characterized in that** the plate-like blades (21) are angularly staggered around the second hub (20) so as to be intercalated with the supporting arms (5) of the scraper tool (2).

4. A rotatable mixing member according to Claim 1, 2 or 3, **characterized in that** the scraper tool (2) has a pair of supporting arms (5) that extend in cantilever manner from said first hub (4), in diametrical position on opposite sides of the hub.

5. A rotatable mixing member according to any one of the preceding claims, **characterized in that** each supporting arm (5) is substantially L-shaped, so as to have a proximal segment (5a) that extends skimming the bottom of the processing tank (103), and a distal segment (5b) that extends skimming the lateral wall of the processing tank (103).

6. A rotatable mixing member according to Claim 5, **characterized in that** the scraper tool (2) additionally comprises at least one stiffening element (8) which extends astride the distal segment (5b) of the supporting arm (5) and the first hub (4) or the distal segment (5b) of another supporting arm (5), so as to connect the distal segment (5b) of the supporting arm (5) in rigid manner directly to the first hub (4) or to the distal segment (5b) of said other supporting arm (5).

7. A rotatable mixing member according to Claim 5 or 6, **characterized in that** the scraping spatulas (6) are located both on the proximal segment (5a) and on the distal segment (5b) of the supporting arm (5) and are made of plastic material.

8. A rotatable mixing member according to any one of the preceding claims, **characterized in that** the mixing tool (3) has a pair of plate-like blades (21) that extend in cantilever manner from said second hub (20), in diametrical position on opposite sides of the hub.

9. A rotatable mixing member according to Claim 8, **characterized in that** the lying plane of the two plate-like blades (21) is orthogonal to the lying plane of the two supporting arms (5) of the scraper tool (2).

10. A rotatable mixing member according to Claim 8 or 9, **characterized in that** the two plate-like blades (21) extend in cantilever manner from the second hub (20), one locally substantially perpendicular and skimming the bottom of the processing tank (103), and the other locally substantially perpendicular and skimming the lateral wall of the processing tank (103).

11. A cream-cooking machine (100) for production of pastry creams and the like comprising: a substantially cylindrical-shaped processing tank (103), which extends coaxially with a substantially vertical longitudinal axis (A) ; a heating assembly (109) able to bring and maintain the processing tank (103) and the contents thereof to/at a given temperature higher than +50°C; a rotatable mixing member (1) fitted in angularly rigid and manually removable manner on a supporting shaft (111) protruding in cantilever manner inside the processing tank (103) substantially coaxial to the longitudinal axis (A) of the tank; and a motor assembly (112) able to drive said supporting shaft (111) into rotation about its longitudinal axis;
the machine (100) **being characterized in that** said rotatable mixing member (1) is realized according to any one of claims 1 to 10.

12. A cream-cooking machine according to Claim 11, **characterized in that** it additionally comprises a refrigerating assembly able to bring and maintain the processing tank (103) and the contents thereof to/at a given temperature ranging between +0°C and +10°C.

## Patentansprüche

1. Drehbares Mischglied (1), das für Cremekochmaschinen (100) geeignet ist und das angepasst ist, auf axial drehbare Weise in dem Verarbeitungstank (103) einer Cremekochmaschine (100) zur Herstellung von Gebäckcreme und dergleichen untergebracht zu sein, um die Gebäckcreme oder ähnliches zu mischen und gleichzeitig die Schicht von Gebäckcreme oder ähnlichem zu entfernen, die an der inneren Fläche bzw. Oberfläche des Verarbeitungstanks (103) haftet/sich bildet;
wobei das drehbare Mischglied (1) ein Abstreifwerkzeug (2) umfasst, das angepasst ist, innerhalb des Verarbeitungstanks (103) um eine gegebene Rotationsachse (A, R) in Rotation versetzt zu werden, und das so strukturiert ist, dass es die innere Fläche des Verarbeitungstanks (103) abstreift, um die Schicht von Gebäckcreme oder ähnlichem zu entfernen;
wobei das drehbare Mischglied (1) **dadurch gekennzeichnet ist, dass** es zusätzlich ein Mischerwerkzeug (3) umfasst, das separat ist und sich von dem Abstreifwerkzeug (2) unterscheidet, es auf entfernbare Weise direkt auf das Abstreifwerkzeug (2) gepasst ist/in Eingriff ist, um sich zusammen mit dem Abstreifwerkzeug (2) zu drehen, und so strukturiert ist, dass es das im Verarbeitungstank (103) vorhandene Material kontinuierlich mischt;
wobei das Abstreifwerkzeug (2) umfasst: eine erste Nabe (4), die koaxial zu der Rotationsachse (R) ist und angepasst ist, auf winkelsteife und manuell entfernbare Weise auf eine Stütz- bzw. Trägerwelle (111) gepasst zu sein, die auf freitragende Weise in den Verarbeitungstank (103) hineinragt; eine Mehrzahl von Stütz- bzw. Trägerarmen (5), die sich auf freitragende Weise von der ersten Nabe (4) erstrecken, und zwar winkelig um die Rotationsachse (R) versetzt, bis sie fast die innere Fläche des Verarbeitungstanks (103) erreichen; und eine Reihe von Abstreifspateln (6), die an den Trägerarmen (5) befestigt sind, um an der inneren Fläche des Verarbeitungstanks (103) zu schaben, wenn sich die erste Nabe (4) in dem Verarbeitungstank (103) zusammen mit der Trägerwelle (111) dreht;
wobei das Mischwerkzeug (3) umfasst: eine zweite Nabe (20), die koaxial zu der Rotationsachse (R) ist und angepasst ist, auf winkelsteife und manuell entfernbare Weise auf die erste Nabe (4) des Abstreifwerkzeugs (2) gepasst zu sein, um sich zusammen mit dem Abstreifwerkzeug (2) zu drehen; und eine Mehrzahl plattenartiger Schaufeln (21), die sich auf freitragende Weise von der zweiten Nabe (20) erstrecken und winkelig um die Rotationsachse (R) versetzt sind.

2. Drehbares Mischglied nach Anspruch 1, **dadurch gekennzeichnet, dass** zumindest eine der plattenartigen Schaufeln (21) im Wesentlichen kammförmig ist.

3. Drehbares Mischglied nach Anspruch 1 oder 2, **dadurch gekennzeichnet, dass** die plattenartigen Schaufeln (21) winkelig um die zweite Nabe (20) versetzt sind, um mit den Trägergarmen (5) des Abstreifwerkzeugs (2) interkaliert zu sein.

4. Drehbares Mischglied nach Anspruch 1, 2 oder 3, **dadurch gekennzeichnet, dass** das Abstreifwerkzeug (2) ein Paar Stütz- bzw. Trägerarme (5) aufweist, die sich auf freitragende Weise von der ersten Nabe (4) in diametraler Position auf gegenüberliegenden bzw. entgegengesetzten Seiten der Nabe erstrecken.

5. Drehbares Mischglied nach einem der vorhergehenden Ansprüche, **dadurch gekennzeichnet, dass** jeder Trägerarm (5) im Wesentlichen L-förmig ist, so dass er ein proximales Segment (5a), das sich den Boden des Verarbeitungstanks (103) streichend erstreckt, und ein distales Segment (5b) aufweist, das sich die Seitenwand des Verarbeitungstanks (103) streichend erstreckt.

6. Drehbares Mischglied nach Anspruch 5, **dadurch gekennzeichnet, dass** das Abstreifwerkzeug (2) zusätzlich zumindest ein Versteifungselement (8) umfasst, das sich rittlings über das distale Segment (5b) des Trägerarms (5) und die erste Nabe (4) oder das distale Segment (5b) eines anderen Trägerarms (5) erstreckt, um das distale Segment (5b) des Trägerarms (5) auf starre Weise direkt mit der ersten Nabe (4) oder mit dem distalen Segment (5b) des anderen Trägerarms (5) zu verbinden.

7. Drehbares Mischglied nach Anspruch 5 oder 6, **dadurch gekennzeichnet, dass** sich die Abstreifspatel (6) sowohl an dem proximalen Segment (5a) als auch an dem distalen Segment (5b) des Trägerarms (5) befinden und aus Kunststoff bestehen.

8. Drehbares Mischglied nach einem der vorhergehenden Ansprüche, **dadurch gekennzeichnet, dass** das Mischwerkzeug (3) ein Paar plattenartiger Schaufeln (21) aufweist, die sich auf freitragende Weise von der zweiten Nabe (20) in diametraler Position auf gegenüberliegenden bzw. entgegengesetzten Seiten der Nabe erstrecken.

9. Drehbares Mischglied nach Anspruch 8, **dadurch gekennzeichnet, dass** die Liegeebene der beiden plattenartigen Schaufeln (21) orthogonal zu der Liegeebene der beiden Trägerarme (5) des Abstreifwerkzeugs (2) ist.

10. Drehbares Mischglied nach Anspruch 8 oder 9, **dadurch gekennzeichnet, dass** sich die beiden plattenartigen Schaufeln (21) auf freitragende Weise von der zweiten Nabe (20) erstrecken, wobei eine lokal im Wesentlichen senkrecht ist und über den Boden des Verarbeitungstanks (103) streicht, und die andere lokal im Wesentlichen senkrecht ist und über die Seitenwand des Verarbeitungstanks (103) streicht.

11. Cremekochmaschine (100) zur Herstellung von Gebäckcremes und dergleichen, umfassend: einen im Wesentlichen zylindrisch geformten Verarbeitungstank (103), der sich koaxial zu einer im Wesentlichen vertikalen Längsachse (A) erstreckt; eine Heizanordnung (109), die in der Lage ist, den Verarbeitungstank (103) und dessen Inhalt auf/bei einer gegebenen Temperatur von mehr als +50°C zu bringen und zu halten; ein drehbares Mischglied (1), das auf winkelsteife und manuell entfernbare Weise auf eine Stütz- bzw. Trägerwelle (111) gepasst ist, die auf freitragende Weise in den Verarbeitungstank (103) hineinragt und im Wesentlichen koaxial zu der Längsachse (A) des Tanks ist; und eine Motoranordnung (112), die in der Lage ist, die Trägerwelle (111) um ihre Längsachse in Rotation zu versetzten;
wobei die Maschine (100) **dadurch gekennzeichnet ist, dass** das drehbare Mischglied (1) gemäß einem der Ansprüche 1 bis 10 realisiert ist.

12. Cremekochmaschine nach Anspruch 11, **dadurch gekennzeichnet, dass** sie zusätzlich eine Kälteanordnung umfasst, die in der Lage ist, den Verarbeitungstank (103) und dessen Inhalt auf/bei einer gegebenen Temperatur in dem Bereich zwischen +0°C und +10°C zu bringen und zu halten.

## Revendications

1. Elément mélangeur rotatif (1) adapté aux machines de type cuiseur à crème (100) et qui est conçu pour être logé de manière axialement rotative à l'intérieur de la cuve de transformation (103) d'une machine de type cuiseur à crème (100) pour la production de crème pâtissière ou autre, afin de mélanger la crème pâtissière ou autre et d'enlever simultanément la couche de crème pâtissière ou autre qui adhère à/se forme sur la surface intérieure de la cuve de transformation (103) ;
l'élément mélangeur rotatif (1) comprenant un outil de raclage (2) qui est adapté pour être entraîné en rotation à l'intérieur de la cuve de transformation (103) autour d'un axe de rotation donné (A, R), et est structuré de manière à racler la surface intérieure de la cuve de transformation (103) pour éliminer ladite couche de crème pâtissière ou autre ;
l'élément mélangeur rotatif (1) **étant caractérisé en ce qu'**il comprend en outre un outil mélangeur (3) qui est discret et distinct dudit outil de raclage (2), est monté/engagé de manière détachable directement sur l'outil de raclage (2) afin de tourner avec l'outil de raclage (2), et est structuré de manière à mélanger en continu le matériau présent dans la cuve de transformation (103) ;
l'outil de raclage (2) comprenant: un premier moyeu (4) qui est coaxial audit axe de rotation (R), et est adapté pour être monté de manière angulairement rigide et amovible manuellement sur un manche de support (111) qui fait saillie en porte-à-faux à l'intérieur de la cuve de transformation (103) ; une pluralité de bras de support (5) qui s'étendent en porte-à-faux depuis ledit premier moyeu (4) décalés angulairement autour dudit axe de rotation (R), jusqu'à presque atteindre la surface interne de la cuve de transformation (103) ; et une série de spatules de raclage (6), qui sont fixées sur les bras de support (5) de manière à racler la surface intérieure de la cuve de transformation (103) lorsque ledit premier moyeu (4) tourne à l'intérieur de la cuve de transformation (103) avec l'arbre de support (111) ;
l'outil mélangeur (3) comprenant: un deuxième moyeu (20) qui est coaxial audit axe de rotation (R), et est adapté pour être monté de manière angulairement rigide et amovible manuellement sur le premier moyeu (4) de l'outil de raclage (2) pour tourner avec l'outil de raclage (2) ; et une pluralité de lames en forme de plaque (21) qui s'étendent en porte-à-faux depuis ledit deuxième moyeu (20) et sont décalées angulairement autour de l'axe de rotation (R).

2. Elément mélangeur rotatif selon la Revendication 1, **caractérisé en ce qu'**au moins une des lames en forme de plaque (21) est sensiblement en forme de peigne.

3. Elément mélangeur rotatif selon la Revendication 1 ou 2, **caractérisé en ce que** les lames en forme de plaque (21) sont décalées angulairement autour du deuxième moyeu (20) de manière à être intercalées avec les bras de support (5) de l'outil racleur (2).

4. Elément mélangeur rotatif selon la Revendication 1, 2 ou 3, **caractérisé en ce que** l'outil racleur (2) comporte une paire de bras de support (5) qui s'étendent en porte-à-faux à partir dudit premier moyeu (4), en position diamétrale sur des côtés opposés du moyeu.

5. Elément mélangeur rotatif selon l'une des revendications précédentes, **caractérisé en ce que** chaque bras de support (5) est sensiblement en forme de L, de manière à présenter un segment proximal (5a) qui s'étend en rasant le fond de la cuve de transformation (103), et un segment distal (5b) qui s'étend en rasant la paroi latérale de la cuve de transformation (103).

6. Elément mélangeur rotatif selon la Revendication 5, **caractérisé en ce que** l'outil racleur (2) comprend en outre au moins un élément de raidissage (8) qui s'étend à cheval sur le segment distal (5b) du bras de support (5) et du premier moyeu (4) ou sur le segment distal (5b) d'un autre bras de support (5), de manière à relier le segment distal (5b) du bras de support (5) de manière rigide directement au premier moyeu (4) ou au segment distal (5b) dudit autre bras de support (5).

7. Elément mélangeur rotatif selon la Revendication 5 ou 6, **caractérisé en ce que** les spatules de raclage (6) sont situées à la fois sur le segment proximal (5a) et sur le segment distal (5b) du bras support (5) et sont en matière plastique.

8. Elément mélangeur rotatif selon l'une des revendications précédentes, **caractérisé en ce que** l'outil mélangeur (3) comporte une paire de lames en forme de plaque (21) qui s'étendent en porte-à-faux à partir dudit deuxième moyeu (20), en position diamétrale sur les côtés opposés du moyeu.

9. Elément mélangeur rotatif selon la Revendication 8, **caractérisé en ce que** le plan de couchage des deux lames en forme de plaque (21) est orthogonal au plan de couchage des deux bras de support (5) de l'outil racleur (2).

10. Elément mélangeur rotatif selon la Revendication 8 ou 9, **caractérisé en ce que** les deux lames en forme de plaque (21) s'étendent en porte-à-faux à partir du deuxième moyeu (20), l'une localement sensiblement perpendiculaire et rasant le fond de la cuve de transformation (103), et l'autre localement sensiblement perpendiculaire et rasant la paroi latérale de la cuve de transformation (103).

11. Machine de type cuiseur à crème (100) pour la production de crèmes pâtissières et autres comprenant: une cuve de transformation de forme sensiblement cylindrique (103), qui s'étend coaxialement à un axe longitudinal sensiblement vertical (A) ; un ensemble de chauffage (109) capable d'amener et de maintenir la cuve de transformation (103) et son contenu jusqu'à/à une température donnée supérieure à +50°C ; un élément mélangeur rotatif (1) monté de manière angulairement rigide et amovible manuellement sur un arbre de support (111) faisant saillie en porte-à-faux à l'intérieur de la cuve de transformation (103) sensiblement coaxial à l'axe longitudinal (A) de la cuve ; et un ensemble moteur (112) capable d'entraîner ledit arbre de support (111) en rotation autour de son axe longitudinal ;
la machine (100) étant **caractérisée en ce que** ledit élément mélangeur rotatif (1) est réalisé selon l'une des revendications 1 à 10.

12. Machine de type cuiseur à crème selon la Revendication 11, **caractérisée en ce qu'**elle comprend en outre un ensemble frigorifique apte à amener et maintenir la cuve de transformation (103) et son contenu jusqu'à/à une température donnée comprise entre +0°C et +10°C.
